# EUROPEAN PATENT APPLICATION

(11) **EP 4 411 937 A1**
(43) Date of publication of application: **07.08.2024**
(21) Application number: 23155111.0
(22) Date of filing: 06.02.2023
(51) Int. Cl.: H01M 10/613, H01M 10/625, H01M 10/6556, H01M 50/231, H01M 50/242, H01M 50/244, H01M 50/249, B60L 50/64, B60L 58/26, F28F 3/12

(54) **BATTERY FLOOR FOR VEHICLES COMPRISING A COOLING**

(71) Applicant: Teijin Limited, Osaka-shi Osaka 530-0005 (JP)
(72) Inventor: SEIDEL, Kristian, 42103 Wuppertal (DE)
(74) Representative: CPW GmbH

(57) **Abstract**

The invention pertains to a battery floor comprising at least one outer layer (1), one sandwich core (2), one cooling plate (5) and one upper layer (3). The at least one upper layer facing a battery pack and the cooling plate comprises at least one cooling channel (4). The at least one cooling channel is closed by the upper layer, whereby the upper layer is made of a fiber reinforced composite material. The battery floor is made in a one-piece construction.

The invention pertains also to a second embodiment of a battery floor. The battery floor comprises at least one outer layer, one sandwich core and one upper layer, which facing a battery pack. The upper layer comprises at least one integrated and enclosed cooling channel and the outer layer and/or the upper layer is made of a fiber reinforced composite material. The battery floor is made in a one-piece construction by a co-molding process.

A method for producing the first and second embodiment of the battery floor is also part of this invention.

## Description

The invention pertains to a battery floor for vehicles with an integrated cooling according to claim 1 and claim 11.

In addition, the invention pertains also to a method for producing such a battery floor for vehicles, whereby the battery floor comprises a cooling.

Battery floors with cooling systems are well known in the prior art.

In WO 2018/202813 for example a support structure for an energy storage device is disclosed. According to this document a cooling structure is embedded in a recess of a base panel. The cooling structure comprises cooling channels which are closed and partially created by a metal plate. In document DE 10 2016 103 411 a battery assembly is disclosed whereby the assembly comprises a multilayered structure. The cooling channels are covered and partially created by a metal material as cover. Document DE 10 2010 024 320 discloses an apparatus for holding a battery pack. According to this disclosure a plurality of channels is integrated in a cooling plate, whereby the cooling plate as well as a bottom layer are rigid and in-between an energy absorbing structured arranged. The apparatus is built up in a layered arrangement, in which the layered structure should be particularly favorable for the energy absorption. Due to the possibility of delamination, energy is absorbed in the event of a crash by an apparatus according to this document.

A disadvantage of the known cooling systems is that the prior art cooling systems generally consist of a material mix, and thus different thermal expansion coefficients are present within the cooling system. This can lead to difficulties in fastening and stability within the cooling systems. In addition, due to the use of a different material mix, for example a metal and composite plastic mix, an electrochemical decoupling can be needed to avoid corrosion.

It was thus the aim of the present invention to overcome or to reduce the disadvantages of the prior art.

This was achieved by a battery floor according to claim 1 and 11 and a method for producing such a battery floor according to claim 15.

According to a first embodiment for the battery floor, the battery floor comprises at least one outer layer, one sandwich core, one cooling plate and one upper layer. The at least one upper layer facing a battery pack. Preferably the upper layer is in direct contact with the battery pack. The cooling plate comprises at least one cooling channel. The at least one cooling channel is closed by the upper layer, whereby the upper layer is made of a fiber reinforced composite material. The battery floor is made in a one-piece construction.

The term "closed" means that the cooling channel is preferably completely covered by the upper layer. This does not exclude that the upper layer itself has for example holes and is permeable. The term "closed" is also full filled when at least 90 %, 80% or 75% of the colling channel open surface is covered by the upper layer.

According to a second embodiment of the battery floor, the battery floor comprises at least one outer layer, one sandwich core and one upper layer, which is facing a battery pack. Also here, preferably the upper layer is in a direct contact with the battery pack. The upper layer comprises at least one integrated and enclosed cooling channel and the outer layer and/or the upper layer are made of a fiber reinforced composite material. In the second embodiment acts the upper layer as cooling plate, whereby the upper layer comprises the at least one cooling channel. The battery floor according to the second embodiment is made in a one-piece construction by a co-molding process. Preferably the battery floor is made in a one-piece construction by a single co-molding step.

The further remarks and features should apply equally to the first and the second embodiment, unless otherwise noted.

As mentioned above, the cooling plate (or the upper layer) comprises at least one cooling channel. The cooling plate comprises preferably a plurality of cooling channels, whereby preferably the dimension of all cooling channels is the same to achieve a homogeneous cooling performance. Furthermore, the cooling channels are evenly distributed within the cooling plate in one preferred embodiment. If the above is not the case, the number of cooling channels and/or the dimension of the cooling channels in the cooling plate is in the area of the battery pack preferably higher than in the rest of the cooling plate.

The battery floor is a one-piece construction, this means that after the battery floor is manufactured, no part of the battery floor can be removed from the battery floor without destroying the battery floor (at least partially). In a one-piece constructed battery floor, preferably all parts of the battery floor are cohesively joined and have preferably a force-fit and additionally a form-fit connection. A one-piece construction is preferably achieved by an integrally molding step.

In one preferred embodiment, the one-piece construction takes place in such a way that during production of the battery floor all parts (outer layer, sandwich core, cooling plate and upper layer) are assembled into one part (battery floor), preferably in one single process step. For example, in a co-molding process the battery floor is constructible in a one-piece construction. However, a one-piece construction is also present if more than one process step is needed for the manufacturing of the battery floor. Preferably not more than two, alternatively not more than three process steps are needed for manufacturing the battery floor in a one-piece construction (starting from the outer layer, sandwich core, cooling plate and upper layer).

Preferably, the upper layer, the cooling plate, the sandwich core and the outer layer (and optimally a further inner layer) forms own horizontal planes and no two components of the above-mentioned parts of the battery floor lie in the same horizontal plane. Thus, the co-molding process expressly does not lead to encased or overmoulded components of the battery floor. However, the co-molding leads to a strong and no detachable connection between the components, so that a one-piece construction is achieved. For example, a battery floor in which the upper layer, the cooling plate, the sandwich core and the outer layer (and optional a further inner layer) each form a plane, whereby all planes are horizontal parallel to each other, is one example for the battery floor.

Preferably, the cooling plate, sandwich core, upper layer and/or outer/layer is made from polyurethan comprising glass fibers or a sheet molding compound (SMC), like glass fibers or carbon fibers in combination with polyester, vinyl ester or phenol resin. More preferably the outer layer is a glass fiber reinforced polyurethane or a sheet molding compound. The layers are arranged in a mold on top of each other and in the manufacturing process melting and/or curing of the resin component ensures a bond between the mentioned parts (thus co-molding is obtained). It should be clear that not every part (cooling plate, sandwich core, upper layer and/or outer/layer) needs to have an uncured matrix (resin) component (when they are placed in the mold). If one or two parts comprises an uncured matrix material this matrix material is sufficient to achieve a bond between the parts (for example the matrix material runs through the layers). Preferably, all parts are bonded due to uncured matrix material.

According to the first embodiment of the present invention the at least one cooling channel within the cooling plate is closed (covered) by the upper layer. This means, without the upper layer a kind of gutter would be present in the cooling plate (instead of a closed channel by using the upper layer).

According to the first and the second embodiment of the present invention the upper layer is made of a fiber reinforced composite material. In one preferred embodiment, the upper layer comprises carbon fibers and/or glass fibers as reinforcing fibers and a thermoplastic material as matrix material. The carbon and/or glass fibers are preferably present as continuous fibers in form of a woven or unidirectional layer or as discontinuous fibers in form of a random distributed non-woven material. The resin of the fiber reinforced composite material may be cured or uncured before the battery floor is manufactured.

According to the second embodiment of the present invention the battery floor is made by a co-molding process. In a co-molding process at least two components (plastic material and further material) are either firmly connected to one another by a chemical or physical process (consolidation or curing) or by mechanical interlocking.

In one preferred embodiment the battery floor of the present invention is made by a co- molding process. Preferably at least the cooling plate, the sandwich core and the outer layer of the first embodiment of the present invention are bonded to each other via co-molding, whereby the inner layer is fixed after the co-molding on the cooling plate (for example by an adhesive or by welding). In one further preferred embodiment the upper layer, the cooling plate, the sandwich core and the outer layer are bonded to each other via co-molding to make the battery floor according to the first embodiment of the present invention. In one preferred embodiment, the battery floor of the second embodiment of the present invention is entirely made by a single co-molding process, whereby all layers and the sandwich core are bonded to each other via co-molding.

In one preferred embodiment the entire at least one cooling plate lies on top of the sandwich core and creates a separate cooling area. This means, the at least one cooling plate is not inserted or embedded into a further plate (layer) or the sandwich core. The at least one cooling plate lies with its entire surface on top of a further layer or the sandwich core. Due to this construction even if different material mixes with different thermal expansion coefficients are used, this does not lead to stresses induced or debonding within this layer of the battery floor.

In one preferred embodiment the at least one cooling plate is made of a metal or a fiber reinforced material (for example from polyurethan comprising glass fibers or a sheet molding compound (SMC), like glass fibers or carbon fibers in combination with polyester, vinyl ester or phenol resin). Metal as material has the advantage of a high thermal conductivity. Due to this heat is dissipated from the battery pack and the battery pack is prevented from overheating. In addition, metal has good resistance to most of the used coolants.

In one further preferred embodiment the fiber reinforced composite material of the upper layer comprises conductive elements. Due to the use of conductive elements an electronic conductivity to the battery pack is (if desired) possible. In one further embodiment, the conductive elements can also or additionally be used to dissipate heat form the battery pack. Thus, effective cooling of the battery pack is possible.

Preferably, the average coefficient of linear thermal expansion of the outer layer, the cooling plate and the upper layer varies by less than 2 × 10⁻⁶ Kelvin⁻¹ from each other measured, e.g. according to ASTM-D696 (in the version from year 2022) in the first embodiment of the invention. According to the second embodiment of the invention, the thermal expansion coefficients of the outer layer and the upper layer preferably vary less than 2 × 10⁻⁶ Kelvin⁻¹ from each other measured, e.g. according to ASTM-D696 (in the version from year 2022).

As a result, the thermal response of the battery floor, which depend on the temperature, is made more uniform and stresses induced by differing coefficients of thermal expansions within the battery floor are avoided. This increases the long-term stability of the battery floor.

In one preferred embodiment the sandwich core is made of a foam and/or a honey comb and/or corrugated core structure and/or a rigid textile structure.

In one preferred embodiment the honeycomb is made of paper, from aluminum or from a plastic or composite material.

In one preferred embodiment, the outer layer and/or the upper layer comprise carbon fibers and/or glass fibers as reinforcing fibers. The reinforcing fibers may be present in the outer layer and/or the upper layer as woven material, unidirectional fiber layer and/or as non-woven fabric. If a non-woven material is used, the reinforcing fibers are preferably present in the non-woven fabric as random oriented short fibers. The reinforcing fibers mentioned above act to increase mechanical properties and performance of the part and/or reduce weight.

In one preferred embodiment the outer layer and/or the upper layer and/or the sandwich core are made by spray impregnation and compression molding, liquid compression molding, resin transfer molding, thermoplastic injection molding, extrusion, pultrusion and/or sheet molding. Preferably, all parts of the battery floor are made by the same kind of manufacturing process. Due to the use of one process method also the recycling of the battery floor is simplified. However, it is also possible that the various parts of the battery floor are manufactured by using different manufacturing processes and afterwards combined in a mold to form the battery floor as a one-piece construction.

The battery floor according to the second embodiment of the invention preferably comprises an additional layer between the outer layer and the sandwich core. This additional layer is preferably a fiber reinforced layer. Due to the additional layer, the cooling plate can easily be bonded to the sandwich core via the additional layer (for example through uncured matrix material within the additional layer). In addition, the additional layer can increase the mechanical performance of the battery floor. The sandwich core for example is covered by the outer layer and the additional layer and thus the stability of the sandwich core is increased. In one preferred embodiment the additional layer and the outer layer are made of the same material, preferably the same reinforced fiber composite material.

Preferably, all layers of the battery floor are made of fiber reinforced material.

Preferably, the battery floor itself is completely made of fiber reinforced material and a matrix material. "Completely" means that at least 90%, more preferred 100% of the battery floor is made of fiber reinforced material and a matrix material.

A further aspect of the present invention pertains to a method for producing a battery floor according to the first and second embodiment of the present invention. Whereby at least the outer layer, the sandwich core, and the cooling plate for the battery floor are co-molded to obtain a one-piece battery floor. In one preferred embodiment, all parts of the battery floor are co-molded to obtain a one-piece battery floor. In one preferred embodiment, all parts of the battery floor are co-molded in one single process step to obtain a one-piece battery floor.

Preferably, the sandwich core is foamed during the co-molding process. In one preferred embodiment the sandwich core is made by a foam, which is foamed and/or hardened during the co-molding process.

In one preferred embodiment the at least one cooling channel is at least partially built during the manufacturing process of the battery floor, preferably during the co-molding process. The at least one cooling channel is at least partially built during the manufacturing process, if at least one channel part is created during the manufacturing process. For example, by using a cooling plate comprising cooling channels (gutters) open at the top towards the battery pack, a cooling channel is created by laying and bonding the upper layer on top of the cooling plate. This has the advantage that the outer layer is a direct part of the cooling system and can dissipate heat from the battery pack very well.

The invention is explained now in more detail with reference to the following figures and the examples, wherein the scope of the invention is not limited by the figures and the examples:
Figure 1 shows schematically a first embodiment of the present invention of a battery floor.
Figure 2 shows schematically a second embodiment of the present invention of a battery floor.

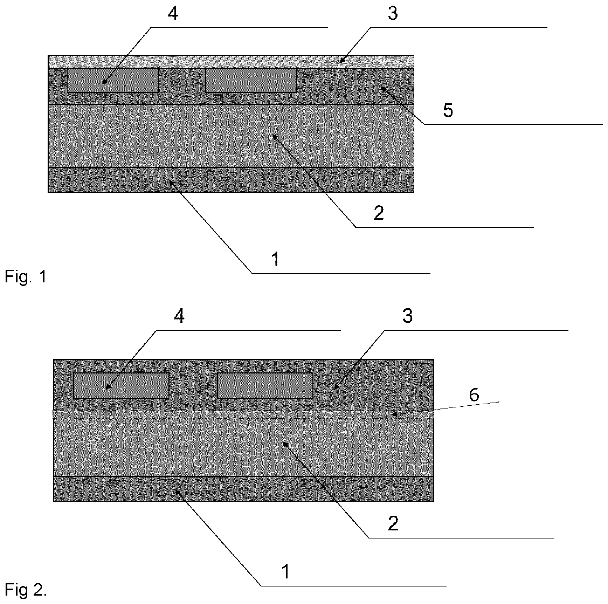

In figure 1 a first embodiment of a battery floor is schematically shown. In this embodiment the upper layer 3 is a cover for the cooling plate 5 and cooling channels 4 are created due to this cover. The upper layer 3 is preferably in direct contact with a battery pack. Due to the fact, that the upper layer 3 is part of the cooling channel the upper layer 3 is able to cool the battery pack efficiently. According to the invention, the upper layer 3 is made of a fiber reinforced material and thus at least parts of the cooling channels 4 are made of a fiber reinforced material. This fiber reinforced material is in contact with the battery pack without the risk of an electrochemical interference between the battery pack and the upper layer 3. To increase the thermal conductivity the upper layer 3 may comprise conductive elements like metal and/or other particles.

In the first embodiment of the present invention an outer layer 1 as well as the upper layer 3 are made of a fiber reinforced material, impregnated by a thermoplastic or thermosetting resin. A sandwich core 2 is preferably made of a foam, for example a polyurethane foam. A cooling plate 5 is preferably made of a metal, for example aluminum. In one preferred embodiment, also the cooling plate 5 is made of fiber reinforced material (for example glass fibers or a sheet molding compound (SMC), like glass fibers or carbon fibers in combination with polyester, vinyl ester or phenol resin). In one special embodiment the cooling plate 5 comprises conductive elements whereby the amount of conductive elements within the cooling plate is high enough for heat dissipation. Within the cooling channels 4 a cooling agent is present in a solid, gaseous or liquid state.

As can be seen in figure 1 (and also in figure 2) the upper layer 3, the outer layer 1, the cooling plate 5 and the sandwich core 2 form their own layer-area, which are arranged one on top of the other to form the battery floor. None layer-area is inserted into or surrounded by another layer-area. Thermally induced dimensional changes in the individual layers advantageously have little effect on the other layers in a battery floor chosen in this way, so that the life time of the battery floor is extended.

In figure 2 a second embodiment of a battery floor is schematically shown. In this embodiment of the battery floor, the cooling plate is the upper layer 3 and comprises cooling channels 4 within the cooling plate. In one preferred variation for the second embodiment between the cooling plate (upper layer 3) and a sandwich core 2 an optional inner layer 6 is present. The inner layer 6, the sandwich core 2 and/or an outer layer 1 are preferably made of a reinforced fiber material. The second embodiment of a battery floor is manufactured by co-molding in a one-piece construction. Also here, all layers of the battery floor are arranged on top of each other and no layer is inserted into or surrounded by another layer.

The embodiment according to figure 1 as well as the embodiment according to figure 2 is manufactured in a one-piece construction. This means, all parts of the battery floor are connected (bonded) to on each other and no layer can be removed from one another without destroying the layer itself or the neighboring layer (fixed with the layer before).

### Example 1

### Step 1: Arranging layers in mold

In case of Fig.1, cooling plate 5, sandwich core 2 and outer layer 1 are arranged in a mold.

The outer layer 1 is made from polyurethane in combination with reinforcing fibers (for example glass fibers) or the outer layer 1 is made from reinforcing fibers (like glass or carbon fibers) in combination with polyester, vinyl ester or phenol resin (e.g. SMC material). The outer layer 1 is not cured and not shaped, when the outer layer 1 is arranged in the mold.

The sandwich core 2 has a honeycomb or corrugated structure or a foam. The sandwich core 2 is also not cured and not shaped, when arranged in the mold.

If the cooling plate 5 is made from SMC material, the cooling plate 5 is not cured and not shaped, when the cooling plate 5 is arranged in the mold. However, if the cooling plate 5 is made by an extrusion process, the cooling plate 5 should previously be shaped and then the shaped cooling plate 5 is arranged in the mold in step 1.

In case of Fig.2, the cooling plate is part of the upper layer 3 with integrated cooling channels 4, additional layer (inner layer 6, sandwich core 2 and outer layer 1) are arranged in the mold.

The outer layer 1 is made from polyurethan in combination with glass fibers (PU-GF) or the outer layer 1 is made from a SMC, in a way so these are not cured and not shaped, when arranged in the mold.

The sandwich core 2 has a honeycomb or corrugated structure or a foam, so these are not cured and not shaped, when arranged in the mold.

However, the upper layer 3 with integrated cooling plate with integrated cooling channels 4 is made from extrusion or pultrusion. The upper layer 3 with integrated cooling channels 4 and should previously be shaped. Shaped upper layer 3 is arranged in the mold in step 1.

### Step 2: Closing the mold

### Step 3: Heating the parts inside the mold, melting and/or curing the resin

The resin in PU-GF, SMC, honeycomb, foam, corrugated sheet is cured. Due to the melted and cured resin, a bond is created between the different layers (parts). According to the embodiment of figure 2 the battery floor is completed after the step 3. A one-piece battery floor is made by a single co-molding process.

For the first embodiment of the present invention a further step 4 is intended:
In the embodiment of Fig.1 the upper layer 3 (metal or cured/shaped SMC or other composite) is joint to the upper layer 3 by an adhesive or other joining technology, e.g. welding.

However, if the upper layer is made from SMC also in the first embodiment according to Figure 1 it is possible to manufacturing a one-piece battery floor in a single co-molding process.

### Example 2

In case of Fig.2, the upper layer 3 as cooling plate with integrated cooling channels 4, additional layer (inner layer 6, sandwich core 2 and outer layer 1) are arranged in the mold.

The outer layer 1 is cured SMC and shaped, when the outer layer 1 is arranged in the mold.

The sandwich core 2 has a paper honeycomb core with sprayed polyurethane. The polyurethane is not cured. The sandwich core is not shaped, when arranged in the mold.

If the upper layer 3 as cooling plate is made from SMC material, the upper layer 3 is cured and shaped, when the upper layer 3 is arranged in the mold.

### Step 2: Closing the mold

### Step 3: Heating the parts inside the mold, curing the sprayed polyurethane.

Due to the cured polyurethane, a bond is created between the different layers (parts). According to the embodiment of figure 2 the battery floor is completed after the step 3. A one-piece battery floor is made by a single co-molding process.

## Claims

1. Battery floor for vehicles comprising at least one outer layer (1), one sandwich core (2), one cooling plate (5) and one upper layer (3), whereby the upper layer (3) facing a battery pack, whereby the cooling plate (5) comprises at least one cooling channel (4), **characterized in that** the at least one cooling channel (4) is closed by the upper layer (3) and the upper layer (3) is made of a fiber reinforced composite material and the battery floor is a one-piece construction.

2. Battery floor according to claim 1, wherein the entire area of the at least one cooling plate (5) is arranged above the sandwich core (2) and creates a separate cooling area.

3. Battery floor according to one of the foregoing claims, wherein the at least one cooling plate (5) is made of a metal and/or a fiber reinforced composite material.

4. Battery floor according to one of the foregoing claims, wherein the fiber reinforced composite material of the upper layer (3) comprises conductive elements.

5. Battery floor according to one of the foregoing claims, wherein the average of the thermal expansion coefficient of the outer layer (1), the cooling plate (5) and the upper layer (3) varies less than 2 × 10⁻⁶ Kelvin⁻¹ from each other measured according to ASTM-D696.

6. Battery floor according to one of the foregoing claims, wherein the sandwich core (2) is made of a foam and/or a honey comb structure and/or a rigid textile structure.

7. Battery floor according to one of the foregoing claims, wherein the outer layer (1) and/or the upper layer (3) is a fiber reinforced composite material, made of carbon fibers and/or glass fibers.

8. Battery floor according to one of the foregoing claims, wherein the outer layer (1) and/or the upper layer (3) and/or the sandwich core (2) is made by pultrusion, extrusion, spray impregnation, compression molding, liquid compression molding, resin transfer molding, thermoplastic injection molding and/or sheet molding.

9. Battery floor according to claim 1 to 8, wherein the battery floor is made by a co-molding-process.

10. Battery floor according one of the foregoing claims, whereby the upper layer (3), the cooling plate (5), the sandwich core (2) and the outer layer (1) forms its own horizontal plane and neither two components of the above-mentioned components of the battery floor lies in the same horizontal plane.

11. Battery floor for vehicles comprising at least one outer layer (1), one sandwich core (2) and one upper layer (3), whereby the upper layer (3) facing a battery pack, whereby the upper layer (3) comprises at least one integrated enclosed cooling channel (4), wherein the outer layer (1) and/or the upper layer (3) is made of a fiber reinforced composite material, **characterized in that** the battery floor is a one-piece construction made by co-molding process, preferably a single co-molding process step.

12. Battery floor according to claim 11, whereby the upper layer (3), the sandwich core (2) and the outer layer (1) forms its own horizontal plane and neither two components of the above-mentioned components of the battery floor lies in the same horizontal plane.

13. Battery floor according to claim 11 or 12, wherein the average of the thermal expansion coefficient of the outer layer (1) and the upper layer (3) varies less than 2 × 10⁻⁶ Kelvin⁻¹ from each other measured according to ASTM-D696.

14. Battery floor according to claim 11 to 13, wherein the battery floor comprises an additional layer (6) between the outer layer (1) and the sandwich core (2).

15. Method for producing a battery floor according to claim 1 or 11 to obtain a one-piece battery floor.
